# EUROPÄISCHE PATENTSCHRIFT

(11) **EP 0 756 921 B1**
(45) Veröffentlichungstag und Bekanntmachung des Hinweises auf die Patenterteilung: **22.03.2000**
(21) Anmeldenummer: 96111132.5
(22) Anmeldetag: 11.07.1996
(51) Int. Cl.: B27K 3/44

(54) **Zubereitung auf der Basis eines speziellen Steinkohlenteeröls und einer Mineralölfraktion sowie deren Verwendung**
Composition based on special coal tar oils and a fraction of mineral oil and use thereof
Composition à base d'huiles spéciales de goudron et d'une fraction d'huile minérale et son utilisation

(30) Priorität: 01.08.1995 DE 19528095
(43) Veröffentlichungstag der Anmeldung: 05.02.1997
(73) Patentinhaber: TOTALFINA DEUTSCHLAND GMBH, 40217 Düsseldorf (DE); RÜTGERS VFT AG, 44579 Castrop-Rauxel (DE)
(72) Erfinder: Behr, Hartmut, Dr., 40699 Erkrath (DE); Boenigk, Winfried, Dr., 59399 Olfen (DE); Komora, Frantisek, Prof., 84102 Bratislava (SK)
(74) Vertreter: Cohausz & Florack

(56) Entgegenhaltungen:
- DE-A- 3 522 655
- DE-A- 4 121 956
- US-A- 2 177 448
- US-A- 2 310 194
- US-A- 3 046 217
- US-A- 3 625 878

## Beschreibung

Steinkohlenteeröle gelten seit langem als Mittel der Wahl zum Schutz von Konstruktionshölzern, Eisenbahnschwellen, Leitungsmasten und Pfählen im Erd- oder Wasserbau. Sie verleihen den Hölzern hydrophobe Eigenschaften, wirken biozid, vermindern die Sprödigkeit des Holzes und verbessern dessen Elastizität. Die Hölzer werden mit Teerölen in Kesseln unter Druck oder aber durch Tränken imprägniert.

Zur Imprägnierung können Steinkohlenteeröle mit einem Siedebereich von 180 bis 500°C eingesetzt werden, wobei einerseits zur Wirkungsoptimierung und andererseits wegen des beträchtlichen ökologischen Drucks in der Vergangenheit Modifizierungen der eingesetzten Steinkohlenteeröle oder der sie enthaltenen Gemische vorgenommen wurden.

So schlägt die DE 35 22 655 C2 ein öliges Holzschutzmittel vor, das 10 bis 100 Gew.% Kohlekonversionsöl im Siedebereich von 200 bis 400°C, 0 bis 90 Gew.% Steinkohlenteer-Imprägnieröl, 0 bis 75 Gew.% Mineraölfraktion im Siedebereich von 200 bis 400°C und 0 bis 60 Gew.% alkyl- oder cycloaromatische Verbindungen zwei- bis vierkerniger Aromaten enthält. Durch diese Zusammensetzung soll insbesondere die Auslaug- und Verdunstungsbeständigkeit sowie das Ausschwitzverhalten der bis dahin bekannten Öle verbessert werden.

Die hochsiedenden Anteile sind wegen der darin enthaltenen mehrkernigen Aromaten ein Gesundheitsrisiko, haben aber im Hinblick auf die Langzeitschutzwirkung der eingesetzten Teeröle besondere Bedeutung. So schlägt die DE 39 20 912 A1 ein Holzschutzmittel auf der Basis von Steinkohlenteerölen vor, welches dessen niedrig- und mittelsiedende Fraktionen, anstelle der hochsiedenden Anteile jedoch ein aromatisches Harz enthält.

Aus der EP 525 302 B1 ist ein geruchsarmes Holzschutzmittel bekannt, zu dessen Herstellung eine Wasserdampfbehandlung der mittel- bis hochsiedenden Teerölfraktionen mit dem Ziel erfolgt, den Anteil geruchsverursachender Bestandteile zu verringern. Dadurch wird u.a. der Gehalt an Naphthalin sowie 1- und 2-Methylnaphthalin verringert. Diese Imprägnieröle besitzen verbesserte Umwelteigenschaften, da sie erheblich geringere Aromaten- und Geruchsimmissionen zeigen, gleichzeitig aber auch schwermetall- und halogenfrei sind. Das Imprägnieröl der EP 525 302 B1 ist kein Gemisch aus einem Teeröl und einer Mineralölfraktion. Der darin beispielhaft als Zusatz zu dem Teeröl vorgeschlagene Bestandteil siedet im Falle einer Fraktion aus der Naphthalinpropylierung in einem Bereich von 320 bis 350°C. Dieser Zusatz dient der Fluiditätserhöhung und damit der Herabsetzung der Kristallisationsneigung des Teeröls in Lagerbehältern.

Die US 2 310 194 beschreibt ein Verfahren zur Herstellung eines Holzschutzmittels, in dem eine Steinkohlenteerfraktion mit einer Mineralölfraktion gemischt, das Gemisch einer Wärmebehandlung bei einer Temperatur von 300 bis 750°C unterzogen und die flüchtigen Bestandteile kondensiert werden. Das erhaltene flüssige Reaktionsprodukt dient als Imprägnieröl. Folglich enthält das Imprägnieröl nur solche Bestandteile aus dem Teeröl, die über 300°C sieden. Andererseits erfolgt durch die Wärmebehandlung auch eine Veränderung der Bestandteile dahingehend, daß die toxische Wirkung des Imprägnieröls erhöht wird.

Nach EP 525 302 B1 hergestellte Imprägnieröle sind derzeit die umweltfreundlichsten steinkohlenteerstämmigen Imprägnieröle. Sie fallen in die WEI-Klasse C (W.E.I. = Westeuropäisches Institut für Holzimprägnierung, Allée Hof-ter-Vleest 5, B-1070 Brüssel).

Praktische Erfahrungen mit einem derartigen Holzschutzmittel zeigen jedoch, daß die Geruchsemission immer noch erheblich, somit eine weitere Geruchsminderung angezeigt ist. Durch die hohe Kristallisationstemperatur ergeben sich zudem Nachteile bei der Lagerung und Verarbeitung.

Der Erfindung liegt deshalb die Aufgabe zugrunde, eine Zubereitung auf Steinkohlenteerölbasis bereitzustellen, die einerseits bei gleichbleibend guter Holzschutzwirkung und toxikologischen Eigenschaften verbesserte verfahrens- und anwendungstechnische Eigenschaften zeigt, insbesondere eine Geruchsminderung herbeizuführen.

Gelöst wird diese Aufgabe durch eine Zubereitung, enthaltend ein Steinkohlenteeröl einer Dichte von 1030 bis 1200 kg/m³, einem Siedebeginn über 200°C, einem Gehalt an Benzo[a]pyren unter 50 ppm, einem Gehalt wasserlöslicher Phenole unter 3 Gew.%, einem Benzo[a]anthracengehalt unter 1000 ppm, und eine Mineralölfraktion einer Dichte von 950 bis 1000 kg/m³, mit mindestens 70 Gew.% Aromatengehalt, bestimmt durch HPLC und einem Destillationsbeginn von mindestens 350°C, wobei Teeröl und Mineralölfraktion in einem Verhältnis von 20:1 bis 1:1 vorliegen zur Verwendung als Holzschutzmittel.

In besonders bevorzugter Weise kann als Steinkohlenteeröl ein Öl mit folgenden technischen Merkmalen für Imprägnieröle WEI Typ C eingesetzt werden:

**Tabelle 1**

| Eigenschaft | Einheit | Bestimungsmethode | WEI Typ C Spezifikation |
|---|---|---|---|
| Dichte (20°C) | [kg/m³] | WEI App. 3 | 1030 - 1170 |
| Wassergehalt | [Vol.%] | WEI App. 4 | max 1 |
| Kristallisationstemp. | [°C] | WEI App. 5 | max 50 |
| Wasserextrahierbare Phenole | [Gew.%] | prEN 1014-4 | max 3 |
| Unlösliche Bestandteile | [Gew.%] | BS144 App. J | max 0,4 |
| Siedeverlauf | | WEI App. 8 | |
| Destillat bis 300°C | [Vol.%] | | max 10 |
| Destillat bis 355°C | [Vol.%] | | 65 - 95 |
| Benzo[a]pyren-Gehalt | [ppm] | prEN 1014-3 | max 50 |
| Flammpunkt PM | [°C] | ISO 2719 | min 61 |

Der erfindungsgemäß eingesetzte Mineralölbestandteil ist eine Mineralölfraktion, die als Rückstand einer Vakuumdestillation nach dessen Entasphaltierung erhältlich ist. Es handelt sich dabei um ein komplexes Gemisch von Kohlenwasserstoffen, hauptsächlich aromatischen Kohlenwasserstoffen mit Verbindungen, die insbesondere mehr als 25 Kohlenstoffatome aufweisen. Vorzugsweise beträgt der Aromatengehalt, ermittelt durch HPLC, 75%, in besonders bevorzugter Weise 80 bis 90%. Die aromatischen Anteile zeichnen sich dabei durch einen besonders niedrigen Gehalt an folgenden polyzyklischen Aromaten aus:

| | |
|---|---|
| Gehalt an Benzo[a]pyren | ppm <1 |
| Gehalt an Benzo[a]anthracen | ppm <1 |
| Gehalt an Benzo[b]fluoranthen | ppm <1 |
| Gehalt an Benzo[k]fluoranthen | ppm <1 |
| Gehalt an Benzo[j]fluoranthen | ppm <1 |
| Gehalt an Dibenzo[a,h]anthracen | ppm <1. |

Neben den aromatischen Bestandteilen sind in kleineren Mengen gesättigte Kohlenwasserstoffe und gegebenenfalls Harze enthalten.

Die HPLC-Bestimmung erfolgt gemäß Journal of Liquid Chromatography, 10 (10), 2115-2132 (1987).

Die Viskosität des Mineralölbestandteils bei 100°C liegt etwa bei 50 bis 75 mm²/s, der Anilinpunkt bei etwa 50 bis 60°C und der Pourpoint im Bereich von 30°C.

Gemäß einer besonders bevorzugten Ausführungsform wird eine Zubereitung eingesetzt, die 80 bis 90 Gew.% Teeröl und und 20 bis 10 Gew.% Mineralölfraktion enthält. Darüber hinaus ist ein Destillationsbeginn des Teeröls von über 270°C besonders bevorzugt.

Nachfolgend werden die physikalisch-chemischen Grundparameter, die Toxikologie sowie die Wirksamkeit gegen holzzerstörende Schädlinge eines beispielhaften Öls gemäß der Erfindung (1) und (2), gemäß den westeuropäischen Beschaffenheitsvorschriften (WEI-A) (V1), gemäß der EP 0 525 302 B1 (V2) sowie der eingesetzten Mineralölfraktion (V3) dargestellt.

In den folgenden Tabellen 2a und 2b werden die Grundparameter der zu vergleichenden Öle angegeben, wobei die erfindungsgemäße Zubereitung (1) 85 Gew.% Steinkohlenteeröl (V2) und 15 Gew.% Mineralölfraktion (V3) enthält.

**Tabelle 2a**

| Grundparameter der Öle | | | | |
|---|---|---|---|---|
| Parameter | V1 | V2 | 1 | 2 |
| Dichte (20°C) [kg/m³] | 1110 | 1104 | 1062 | 1048 |
| Kristallisationstemperatur [°C] | 19 | 22 | 3 | 3 |
| Erstarrungstemperatur [°C] | -10 | -9 | -12 | -14 |
| saure Öle [Gew.%] | 2,7 | 2,6 | 2,5 | 2,4 |
| Viskosität(80°C) [°E] | 1,3 | 1,4 | 1,5 | 1,6 |
| | | | | |
| Destillationsbeginn [°C] | 245 | 285 | 307 | 307 |
| 10% d.Volumens | 259 | 305 | 320 | 320 |
| 20% d.Volumens | 264 | 315 | 327 | 328 |
| 30% d.Volumens | 285 | 324 | 338 | 340 |
| 40% d.Volumens | 298 | 330 | 343 | 345 |
| 50% d.Volumens | 319 | 336 | 351 | 353 |
| 60% d.Volumens | 358 | 343 | 360 | 363 |
| 70% d.Volumens | 380 | 350 | 373 | 376 |
| 80% d.Volumens | 398 | 358 | 388 | 391 |
| 90% d.Volumens | 400 | 365 | 393 | 395 |
| | | | | |
| Flammpunkt | | | | |
| (offener Tiegel) [°C] | 120 | 140 | 170 | 178 |
| Ablagerungen [Gew%] | 0,2 | 0,25 | 0,04 | 0,03 |
| Wärmekapazität [J.g^{- 1}Deg^{- 1}] | 1,7878 | 1,7652 | 1,7613 | 1,7600 |

**Tabelle 2b**

| Grundparameter der Öle | |
|---|---|
| Grundparameter V3 | |
| Dichte (15°C) [kg/m³] | 990 |
| Flammpunkt (offener Tiegel) [°C] | 300 |
| Aromatengehalt (HPLC) [Gew.%] | 88 |

| Destillationsbeginn | |
|---|---|
| 5% d. Volumens [°C] | 500 |
| 90% d. Volumens [°C] | 650 |
| Viskosität (100°C) [mm²/s] | 67 |
| Pourpoint [°C] | 32 |

Die in Tabelle 2a angeführten Ergebnisse zeigen, daß das Vorhandensein von 15% der in Tabelle 2b näher spezifizierten Mineralölfraktion (V3) überraschenderweise die Kristallisationstemperatur des Imprägnieröls (V2) und somit dessen Tendenz, in Tanken Kristalle abzuscheiden, signifikant senkt. Stark herabgesetzt wird die Entbindung flüchtiger Bestandteile (Erhöhung des Flammpunktes und des Destillationsbeginns). Es werden keine negativen Nebeneffekte beobachtet. Das Ziel der Verbesserung wurde somit voll erreicht. Die Eigenschaften des neuen Imprägnieröls (1) übertreffen auch die des derzeit meist für Holzschwellen eingesetzten Imprägniermittels nach WEI Typ A (V1).

Die obigen Versuche wurden mit dem zuvor beschriebenen Teeröl durchgeführt. Diese Einschränkung ist jedoch nicht zwingend. Auch weitere steinkohlenteerstämmige Öle, die nicht der WEI-Klasse C entsprechen, können eingesetzt werden, sofern diese erfindungsgemäß einzusetzenden Teeröle die folgenden Eigenschaften aufweisen, um eine Verschlechterung gegenüber dem Stand der Technik zu vermeiden.

**Tabelle 3**

| Eigenschaft | Bestimungsmethode | |
|---|---|---|
| Wasserextrahierbare Phenole | prEN 1014-4 | max 3 Gew.% |
| Siedeverlauf | WEI App. 8 | |
| Destillat bis 300°C | | max 10 Vol% |
| Benzo[a]pyren-Gehalt | prEN 1014-3 | max 50 ppm |
| Benzo[a]anthracen-Gehalt | HPLC | max 1000 ppm |

Die Grenzen orientieren sich an den gültigen europäischen bzw. deutschen Grenzwerten für einzelne Gefahrstoffe.

Andere Parameter des eingesetzten Teeröls können auch außerhalb der in Tab. 1 gelisteten WEI Typ C Spezifikationen liegen. Dies betrifft zum Beispiel die Kristallisationstemperatur. Auch hoch kristallisierende Anthracenöle, die sogar bei warmer Lagerung im Tank einen nur schwer wieder auflösbaren Kristallbrei bilden, lassen sich durch Zugabe der oben beschriebenen Mineralölkomponente in ihrer Lagerstabilität und Verarbeitbarkeit wesentlich verbessern.

So wurden 85 Gew.% eines Teeröls (V4) mit in Tabelle 4 aufgeführten Daten mit 15 Gew.% der Mineralölkomponente (V3) gemischt. Es entsteht ein neues erfindungsgemäßes Holzschutzmittel (3), dessen technische Daten ebenfalls in Tabelle 4 zu finden sind.

**Tabelle 4**

| Technische Daten | | |
|---|---|---|
| | V4 | 3 |
| Dichte (20°C) [kg/m³] | 1125 | 1103 |
| | | |
| Siedebeginn [°C] | 299 | 301 |
| Destillat bis 300°C [%] | 1 | 0 |
| Destillat bis 355°C [%] | 80 | 62 |
| | | |
| Kristallisationstemp. [°C] | 53 | 20 |

Auch in diesem Fall werden die überraschend positiven Wirkungen der Mineralölfraktion sichtbar. Zusätzlich zu den ökologischen Vorteilen der Erfindung wird auch ein Problem der Praxis gelöst. Die beim Erkalten von Teerölen auftretende Kristallisation einzelner Bestandteile kann erfolgreich unterdrückt werden. In der Praxis reduziert sich durch die Kristallbildung der effektiv nutzbare Tanklagerraum zunehmend. Die notwendige Regenerierung des Tankvolumens ist aufwendig und entsprechend kostenintensiv.

Zusätzlich wurden anwendungstechnische Prüfungen zur Ölfixierung im Holz durchgeführt. Hierzu wurden Buchen- und Kiefernklötzchen der Größe 50 x 25 x 15 mm³ eingesetzt. Das Imprägniermittel wurde in Form von 40%igen Toluollösungen appliziert, worauf eine Ölaufnahme von etwa 125 kg.m⁻³ Öl für die Buchenklötzchen und etwa 180 kg.m⁻³ Öl für die Kiefernklötzchen erfolgte. Vor der Imprägnierung und nachher wurden die Klötzchen gewogen und die Ölaufnahme berechnet. Nach der Imprägnierung wurden die Klötzchen sechs Wochen bei 20°C und 65% relativer Luftfeuchtigkeit konditioniert.

Die eingesetzten Öle und durchschnittlichen Ölaufnahmen der einzelnen Holzarten sind in der Tabelle 5 angegeben.

**Tabelle 5**

| Ölaufnahme der geprüften Holzarten | | |
|---|---|---|
| Öl | Ölaufnahme (kg.m⁻³) | |
| | Buche | Kiefer |
| 1 | 123,9 | 179,1 |
| 2 | 122,2 | 178,8 |
| V1 | 127,9 | 183,7 |
| V2 | 130,1 | 186,4 |

Das erfindungsgemäße Öl (2) besteht aus 80% Steinkohlenteeröl (V2) und 20% Mineralölfraktion (V3).
Der nachfolgend beschriebene Verdampfungstest wurde mit jeweils 10 imprägnierten Kiefern- und Buchenklötzchen sowie jeweils 10 unbehandelten Kiefern- und Buchenklötzchen durchgeführt. Zur Eliminierung des Holzeinflusses wurden auch die reinen Öle auf Petrischälchen mit einem Durchmesser von 8 cm eingesetzt. Alle Materialien wurden wie folgt künstlich gealtert:
Verdampfung 20°C 90 Tage Laborluft
Verdampfung 40°C 90 Tage Trockner mit Zwangsluftströmung
Verdampfung 80°C 90 Tage Trockner mit Zwangsluftströmung
Nach Testabschluß wurden die Holzklötzchen erneut wie oben beschrieben konditioniert.

In den nachfolgenden Abbildungen 1, 2 und 3 sind die Ergebnisse der Ölverdampfung dargestellt.

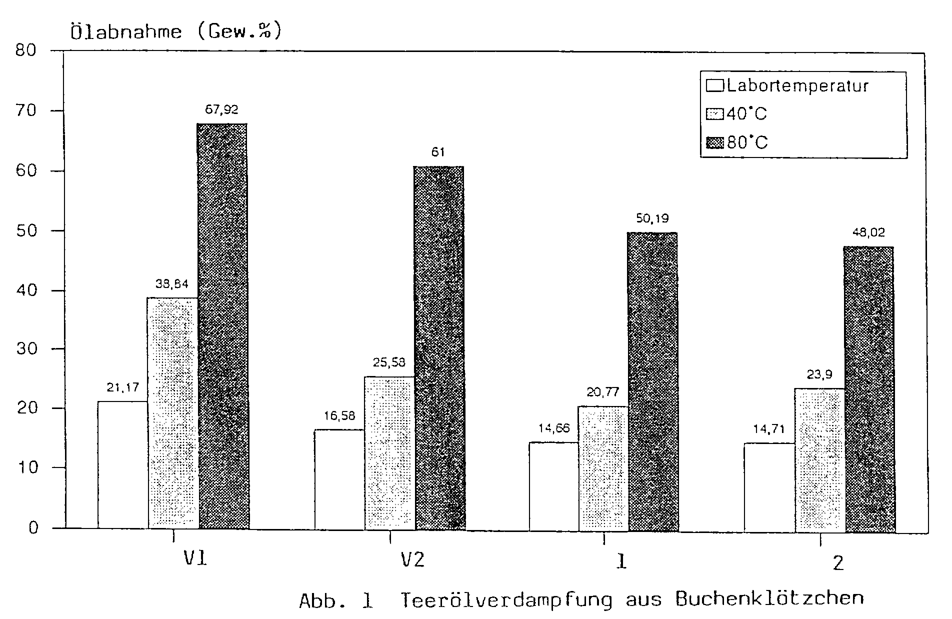

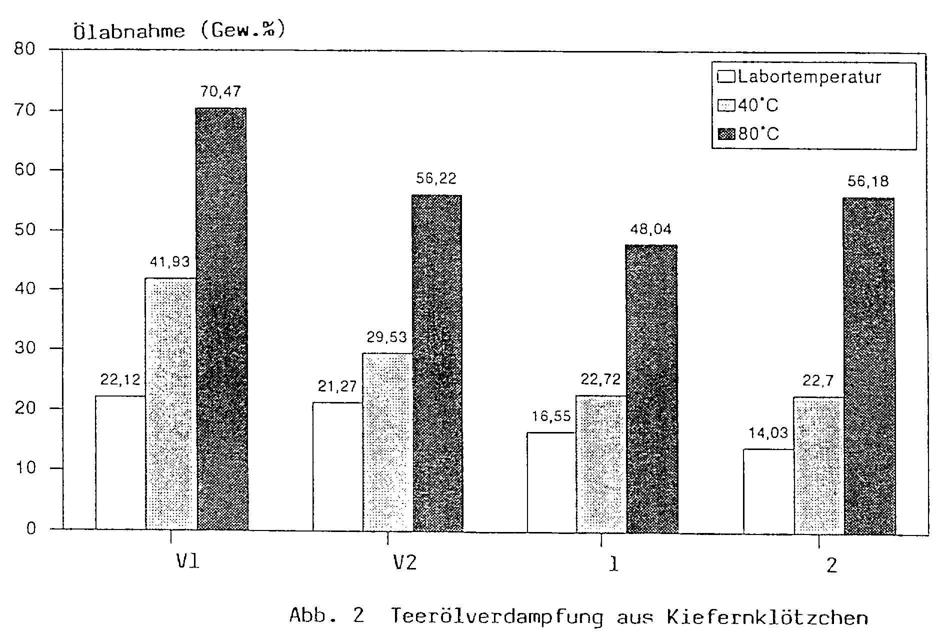

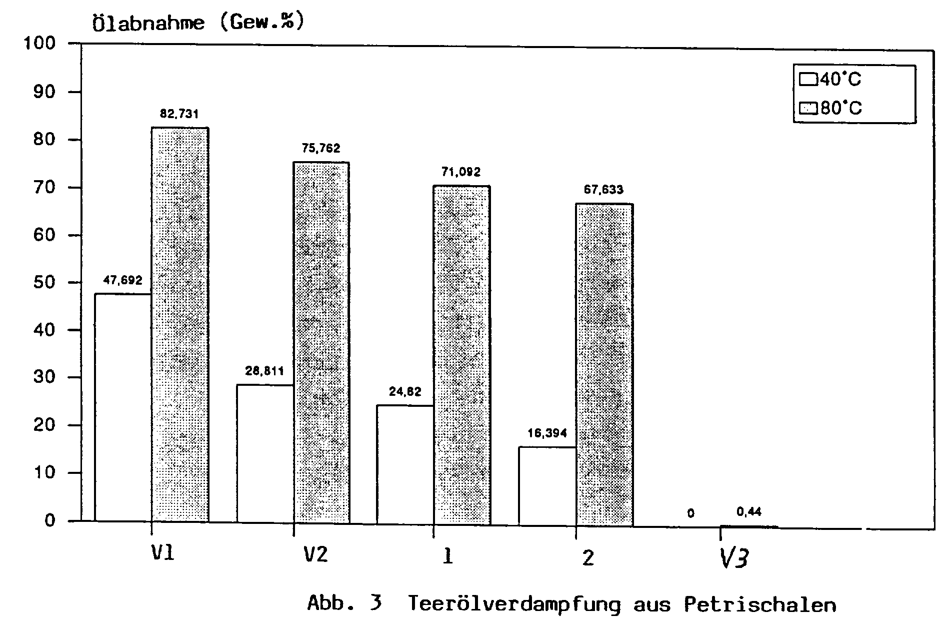

Aus den Abbildungen 1 und 2 wird deutlich, daß alle Öle aus Buche tendentiell etwas weniger verdampfen als aus Kiefer. Die Verdampfungsneigung steigt wie erwartet mit zunehmender Temperatur. Der direkte Vergleich der Öle zeigt eine gute Korrelation mit den Ergebnissen der Siedeanalyse (Tab. 1). V1 verdampft am stärksten, V2 wesentlich weniger; am besten schneiden jedoch die erfindungsgemäßen Öle (1) und (2) ab.

Abbildung 3 bestätigt unter Ausschaltung der Holzanatomie an den reinen Ölen in einer Langzeituntersuchung die im Zeitraffertest Labordestillation (Tab. 1) gefundene Reihenfolge der Ölflüchtigkeit. Die Unterschiede in der Verdampfung des Öls mit 20% Mineralölfraktion (2) aus dem imprägnierten Holz und aus der Glasschale ist wahrscheinlich auf die oberflächennahe Verteilung von (2) im Holz aufgrund der höheren Viskosität von (2) zurückzuführen.

Die Ursache für den positiven Einfluß der Mineralölkomponente (V3) auf die Verdampfungsneigung des Teeröls (V2) ist nicht wissenschaftlich exakt geklärt. Es wird jedoch vermutet, daß die hochsiedenden mit Teeraromaten verträglichen Mineralölverbindungen eine Wechselwirkung mit den Teerölverbindungen ausüben und so die Teerölkomponenten in der Mischung besser fixieren.

### Wirksamkeit gegenüber holzzerstörenden Pilzen

Die fungizide Wirksamkeit der Teeröle gegen holzzerstörende Pilze (Basidiomyceten) wurde nach der EN 113 (Euro-Norm) ermittelt. Der Basistest EN 113 basiert auf der Einwirkung einer reinen Kultur des holzzerstörenden Pilzes am Malz-Agar-Boden in Kolle-Flaschen auf Kiefern- und Buchenprüfklötzchen. Vor der Exposition werden die Klötzchen mit verschiedenen Konzentrationen des zu prüfenden Stoffes behandelt, und sie werden durch
γ-Strahlung (1,2 Mo) sterilisiert, um chemische und physikalische Änderungen des getesteten Mittels auszuschließen. Die behandelten und unbehandelten Kontrollklötzchen werden der Pilzeinwirkung gleichzeitig 16 Wochen lang bei 28°C ausgesetzt. Nach dem Ablauf dieser Zeit wird gravimetrisch die Massenabnahme der Klötzchen bestimmt, und es werden die toxischen Grenzen des getesteten Stoffs für den konkreten holzzerstörenden Pilz festgesetzt. Toxische Grenzen sind als zwei Grenzen definiert, die niedrigere ist die Stoffaufnahme, bei welcher der Pilz noch wächst, die höhere repräsentiert die Stoffaufnahme, die das Wachstum des Pilzes verhindert. Der Realwert befindet sich zwischen diesen zwei Werten.

Die Prüfung nach EN113 wurde zusätzlich durch eine vorgeschaltete Auslagung und Windkanalbeanspruchung der Prüfkörper nach EN73 und EN84 verschärft (Tab. 6).

**Tabelle 6**

| Wirksamkeit gegenüber Basidiomyceten | | | | |
|---|---|---|---|---|
| Mittel | Holzart | Pilz | Toxische Grenze kg.m⁻³ | |
| | | | Basistest | Künstl. Alterung |
| V1 | Kiefer | L.Ledideus | 14,1-25,8 | 29,1-39,5 |
| | Buche | L. Ciathiformis | 10,9-20,3 | 10,1-20,9 |
| V2 | Kiefer | L. Lepideus | 12,7-18,1 | 20,3-37,4 |
| | Buche | L. Ciathiformis | 10,2-18,1 | 10,0-19,7 |
| V3 | Kiefer | L. Lepideus | >220 | >220 |
| | Buche | L. Ciathiformis | >170 | >190 |
| 1 | Kiefer | L. Lepideus | 20,5-36,1 | 21,3-38,2 |
| | Buche | L. Ciathiformis | 10,8-21,9 | 19,8-35,3 |

Aus den in der Tabelle 6 angegebenen Werten geht hervor, daß die Wirksamkeit der untersuchten Öle gegenüber Basidiomyceten sich im Bereich bis zu 40 kg.m⁻³ bewegt, und es ist festzustellen, daß das erfindungsgemäße Holzschutzmittel die gleiche hohe Wirksamkeit zeigt wie die Holzschutzöle aus dem Stand der Technik. Erwartungsgemäß ist die erfindungsgemäß eingesetzte Mineralölfraktion allein (V3) gegenüber Basidiomyceten unwirksam.

Die Wirksamkeit der drei zu vergleichenden Holzschutzöle gegen Moderfäule wurde laut ENV 807 an Vermikulita ermittelt. Die künstliche Alterung erfolgte wie oben gemäß EN 73 und EN 84. Die erzielten Ergebnisse werden in der Tabelle 7 gezeigt.

**Tabelle 7**

| Wirksamkeit gegen Moderfäule | | | |
|---|---|---|---|
| Mittel | Holzart | Toxische Grenze kg.m⁻³ | |
| | | Basistest | künstl. Alterung |
| V1 | Kiefer | 48,5-76,2 | 49,8-76,5 |
| | Buche | 55,2-83,4 | 57,2-85,3 |
| V2 | Kiefer | 51,2-79,3 | 50,7-79,9 |
| | Buche | 53,5-80,7 | 58,2-84,1 |
| V3 | Kiefer | >265 | >267 |
| | Buche | >201 | >209 |
| 1 | Kiefer | 45,8-77,6 | 49,9-81,8 |
| | Buche | 52,6-80,1 | 56,3-66,0 |

Die in der Tabelle angegebenen Werte zeigen, daß das erfindungsgemäße Holzschutzöl dieselbe hohe Wirksamkeit wie die bekannten Öle aufweist. Erwartungsgemäß ist die erfindungsgemäß eingesetzte Mineralölfraktion allein (V3)gegenüber Weichfäule unwirksam.

### Wirksamkeit gegenüber Termiten

Die Wirksamkeit gegenüber Termiten wurde nach EN 117 bestimmt. Neben dem Grundtest wurde auch der Vergleichstest nach künstlicher Alterung (EN 73; EN 84) durchgeführt. Die Ergebnisse sind in der Tabelle 8 gezeigt.

**Tabelle 8**

| Wirksamkeit der untersuchten Öle gegenüber Termiten | | | |
|---|---|---|---|
| Mittel | Holzart | Toxische Grenze kg.m⁻³ | |
| | | Grundtest | künstliche Alterung |
| V1 | Kiefer | <50,9 | <50,9 |
| V2 | Kiefer | <47,3 | <47,3 |
| V3 | Kiefer | >230,4 | >230,4 |
| 1 | Kiefer | 12,6-26,1 | 14,3-25,7 |

Aus den in der Tabelle dargestellten Ergebnissen ist ersichtlich, daß die Wirksamkeit des erfindungsgemäßen Öls gegenüber Termiten sehr hoch ist, etwa 20 kg.m⁻³, und zwar im Grundtest als auch im Test mit der künstlichen Alterung. Die Wirksamkeit ist besser als bei den Ölen nach dem Stand der Technik. Die erfindungsgemäß eingesetzte Mineralölfraktion allein ist unwirksam.

Insgesamt kann festgestellt werden, daß die erfindungsgemäßen Zubereitungen die hohe Wirksamkeit der bekannten Holzschutzöle besitzen und dabei noch verbesserte Eigenschaften bezüglich der Ölstabilität im Holz aufweisen. Für alle geprüften Zubereitungen gilt, daß das Imprägnierverfahren eine Ölaufnahme von > 80 kg.m⁻³ gewährleisten muß.

### Toxikologie der Mineralölfraktion

Da die toxikologischen Eigenschaften des Teeröls (V2) bekannt und besser als andere Teerölgemische beurteilt werden, sind für die Beurteilung der Erfindung die toxikologischen Eigenschaften der Mineralölfraktion (V3) von Bedeutung.

Die dazu erhaltenen Ergebnisse sowie eine Auswertung ist in der folgenden Tabelle 9 dargestellt.

**Tabelle 9**

| Toxikologie der Mineralölfraktion | | |
|---|---|---|
| Test | Ergebnis | Bewertung |
| - Mutagenität | negativ | |
| - akute Oraltoxizität LD₅₀ | > 15 g.kg⁻¹ | ungiftig |
| - akute Dermaltoxizität LD₅₀ | > 5 ml.kg⁻¹ | wird in toxischer Menge nicht resorbiert |
| - Augenreizbarkeit | Schädigungsstufe 1 | für Kaninchenauge nicht reizend |
| - Hautreizbarkeit | Schädigungsstufe 1 | für Kaninchenhaut nicht reizend |

Diese Ergebnisse zeigen, daß die erfindungsgemäß eingesetzte Mineralölfraktion toxikologisch relativ unschädlich ist. Es kann also festgestellt werden, daß die Toxizität durch Zugabe dieser Mineralölfraktion zu den erfindungsgemäß eingesetzten Teerölen nicht erhöht wird.

## Patentansprüche

1. Zubereitung, enthaltend ein Steinkohlenteeröl einer Dichte von 1030 bis 1200 kg/m³, einem Siedebeginn über 200°C, einem Gehalt an Benzo[a]pyren unter 50 ppm, einem Gehalt wasserlöslicher Phenole unter 3 Gew.%, einem Benzo[a]anthracengehalt unter 1000 ppm und eine Mineralölfraktion einer Dichte von 950 bis 1000 kg/m³, mit mindestens 70 Gew.% Aromatengehalt, bestimmt durch HPLC und einem Destillationsbeginn von mindestens 350°C, wobei Teeröl und Mineralölfraktion in einem Verhältnis von 20:1 bis 1:1 vorliegen zur Verwendung als Holzschutzmittel.

2. Zubereitung nach Anspruch 1, dadurch gekennzeichnet, daß der Destillationsbeginn des Steinkohlenteeröls über 270°C liegt.

3. Zubereitung nach Anspruch 1 oder 2, dadurch gekennzeichnet, daß sie 80 bis 90 Gew.% Teeröl und 20 bis 10 Gew.% Mineralölfraktion enthält.

4. Zubereitung nach Anspruch 1 bis 3, dadurch gekennzeichnet, daß der Aromatengehalt 80 bis 90 Gew.%, bestimmt durch HPLC, beträgt.

## Claims

1. A composition for use as a wood preservative containing a coal tar oil with a density from 1030 to 1200 kg/m³, an initial boiling point above 200 °C, a benzo[a]pyrene content below 50 ppm, a watersoluble phenols content below 1000 ppm, and a mineral oil fraction with a density from 950 to 1000 kg/m³ with at least 70 % by weight aromatic content determined by HPLC, and initial distillation of at least 350 °C, where the tar oil and the mineral oil fractions are present in a ratio from 20:1 to 1:1.

2. A composition according to claim 1, characterized in that the initial distillation of the coal tar oil lies above 270 °C.

3. A composition according to claims 1 and 2, characterized in that it contains 80 to 90 % by weight tar oil and 20 to 10 % by weight mineral oil fraction.

4. A composition according to claims 1 to 3, characterized in that the aromatic content is 80 to 90 % by weight, determined by HPLC.

## Revendications

1. Composition contenant une huile de goudron de houille ayant une masse spécifique allant de 1030 à 1200 kg/m³, un début d'ébullition supérieure à 200°C, une teneur en benzo[a]pyrène inférieure à 50 ppm, une teneur en phénols solubles dans l'eau inférieure à 3% en poids, une teneur en benzo[a]anthracène inférieure à 1000 ppm et une fraction d'huile minérale ayant une masse spécifique allant de 950 à 1000 kg/m³, avec une teneur en aromatiques d'au moins 70% en poids, déterminée par HPLC, et un début de distillation à au moins 350°C, où l'huile de goudron et la fraction huile minérale sont présents en un rapport allant de 20:1 à 1:1, à utiliser comme agent de protection du bois.

2. Composition suivant la revendication 1, caractérisée en ce que le début de distillation de l'huile de goudron de houille se situe au-dessus de 270°C.

3. Composition suivant la revendication 1 ou 2, caractérisée en ce qu'elle contient 80 à 90% en poids d'huile de goudron et 20 à 10% en poids de fraction d'huile minérale.

4. Composition suivant les revendications 1 à 3, caractérisée en ce que la teneur en aromatique se situe dans l'intervalle allant de 80 à 90% en poids, déterminée par HPLC.
